# EUROPEAN PATENT SPECIFICATION

(11) **EP 2 957 747 B1**
(45) Date of publication and mention of the grant of the patent: **06.11.2019**
(21) Application number: 13875314.0
(22) Date of filing: 24.12.2013
(51) Int. Cl.: F02D 9/02, F02M 69/00, F02D 9/12, F02D 9/10, B29C 65/34, F02M 69/32, F02D 11/02, G05G 1/30, G05G 1/44, G05G 5/03, B29C 65/00, F16K 27/10

(54) **FLOW VOLUME CONTROL DEVICE**
VORRICHTUNG ZUR REGELUNG EINES STRÖMUNGSVOLUMENS
DISPOSITIF DE COMMANDE DE VOLUME D'ÉCOULEMENT

(30) Priority: 14.02.2013 JP 2013026963
(43) Date of publication of application: 23.12.2015
(73) Proprietor: Keihin Corporation, Tokyo 163-0539 (JP)
(72) Inventor: INAGAKI Daichi, Shioya-gun Tochigi 329-1233 (JP); MORITA Shinichirou, Shioya-gun Tochigi 329-1233 (JP)
(74) Representative: Feller, Frank
(86) International application number: PCT/JP2013/084496
(87) International publication number: WO 2014/125740

(56) References cited:
- EP-A1- 1 422 419
- EP-A1- 1 939 443
- EP-A2- 1 911 950
- WO-A1-2005/095774
- JP-A- H09 264 484
- JP-A- 2001 141 166
- JP-A- 2002 349 396
- JP-A- 2004 183 523
- JP-A- 2009 036 264
- JP-A- 2011 126 233
- US-A1- 2009 114 186

## Description

### TECHNICAL FIELD

The present invention relates to an improvement of a flow rate control device in which a valve guide hole and a metering hole are formed in a control base, the metering hole opening on an inside face of the valve guide hole and a fluid passing through the metering hole by way of the valve guide hole, a control valve for opening and closing the metering hole is fitted into the valve guide hole, an output shaft of an actuator is linked to the control valve in order to make the control valve open and close, and a stator of the actuator is fitted into a mounting hole provided in the control base so as to communicate with the valve guide hole.

### BACKGROUND ART

Such a flow rate control device according to the preamble of claim 1 is already known from JP 2004 183 523 A or WO 2005/095774 A1.

JP 2011 126 233 A teaches the art aiming to improve a heat welding strength and an anti-leaking property in a heat welding process by preventing deviation of a place of a heating resistor. Fig. 10 thereof shows the state wherein welding has been completed. In this state where the convex portion 3c of cover 3 has been inserted into the concave portion 2c of case body 2, there is still a clearance between the mating faces of the cover 3 and case body 2, but they do not abut against each other.

### SUMMARY OF THE INVENTION

### PROBLEMS TO BE SOLVED BY THE INVENTION

In a conventional flow rate control device, since the structure that joins a control base and an actuator is formed from a housing for retaining the actuator, a mounting plate latched to an end part of the housing, and a bolt for fixing the mounting plate to the control base, the number of components and the number of assembly steps are large, and it is difficult to reduce the cost.

The present invention has been accomplished in light of such circumstances, and it is an object thereof to provide a flow rate control device that is equipped with a structure for joining a control base and an actuator, the structure having a small number of components and a simple structure and being inexpensive.

### MEANS FOR SOLVING THE PROBLEMS

In order to attain the above object, according to a first aspect of the present invention, there is provided a flow rate control device in accordance with claim 1.
In this flow rate control device, a valve guide hole and a metering hole are formed in a control base, the metering hole opening on an inside face of the valve guide hole and a fluid passing through the metering hole by way of the valve guide hole, a control valve for opening and closing the metering hole is fitted into the valve guide hole, an output shaft of an actuator is linked to the control valve in order to make the control valve open and close, and a stator of the actuator is fitted into a mounting hole provided in the control base so as to communicate with the valve guide hole, characterized in that the control base is provided with a first joining flange, made of a synthetic resin, extending in a direction perpendicular to an axial direction of the mounting hole, the stator of the actuator is provided with a second joining flange, made of a synthetic resin, opposing the first joining flange, a welding concave portion is provided in one of opposing faces of the first and second joining flanges, a welding convex portion that is to be inserted into the welding concave portion is provided on the other of the opposing faces, a heating element for welding a bottom part of the welding concave portion and a periphery of an extremity part of the welding convex portion is disposed between the bottom part and the extremity part, and the first and second joining flanges are provided with welding restriction parts that maintain a defined value by abutting against each other when the amount of sinking of the bottom part and the extremity part during welding reaches the defined value. It should be noted here that the actuator corresponds to an eclectic motor 20 in an embodiment of the present invention, which is described later, and the welding concave portion and the welding convex portion correspond to a welding groove 39 and a welding projection 40 in the embodiment.

Further, according to a second aspect of the present invention, in addition to the first aspect, a step opposing an end face of the stator is formed between the mounting hole and the valve guide hole, a seal member is disposed between the step and the end face of the stator, and the seal member is compressed by the step and the stator when the first and second flanges are welded.

Furthermore, according to a third aspect of the present invention, in addition to the first aspect, the welding concave portion and the welding convex portion are formed into an annular shape so as to surround the stator and the mounting hole.

### EFFECTS OF THE INVENTION

In accordance with the first aspect of the present invention, since the control base is provided with the first joining flange, made of a synthetic resin, extending in a direction perpendicular to the axial direction of the mounting hole, the stator of the actuator is provided with the second joining flange, made of a synthetic resin, opposing the first joining flange, the welding recess is provided in one of opposing faces of the first and second joining flanges, the welding projection inserted into the welding recess is provided on the other of the opposing faces, and the heating element for welding the bottom part of the welding recess and the periphery of the extremity part of the welding projection is disposed between the bottom part and the extremity part, it is possible to join the control base and the actuator without using a fixing member such as a mounting plate or a bolt, thus simplifying the joining structure and consequently reducing the cost.

Moreover, since the first and second joining flanges are provided with welding restriction parts that maintain a defined value by abutting against each other when the amount of sinking of the bottom part and the extremity part during welding reaches the defined value, it is possible to keep the relative positions of the control base and the actuator fixed, thus stabilizing the opening and closing positions of the control valve.

In accordance with the second aspect of the present invention, since the step opposing the end face of the stator is formed between the mounting hole and the valve guide hole, the seal member is disposed between the step and the end face of the stator, and the seal member is compressed by the step and the stator when the first and second joining flanges are welded, combined with the welding restriction part being provided, the sealing pressure of the seal member is kept appropriate, the control base and the stator are sealed reliably, and it is possible to prevent foreign matter from entering into the actuator side via the valve guide hole.

In accordance with the third aspect of the present invention, since the welding recess and the welding projection are formed into an annular shape so as to surround the stator and the mounting hole, the welded part surrounds the mounting hole and the stator, and it is possible to reliably seal the motor mounting hole and the stator.

### BRIEF DESCRIPTION OF DRAWINGS

FIG. 1 is a longitudinally sectioned side view of an engine air intake control device related to an embodiment of the present invention. (first embodiment)
FIG. 2 is an enlarged sectional view along line 2-2 in FIG. 1. (first embodiment)
FIG. 3 is a sectional view along line 3-3 in FIG. 2, the right half showing a state before welding of first and second joining flanges and the left half showing a state after welding of the first and second joining flanges. (first embodiment)

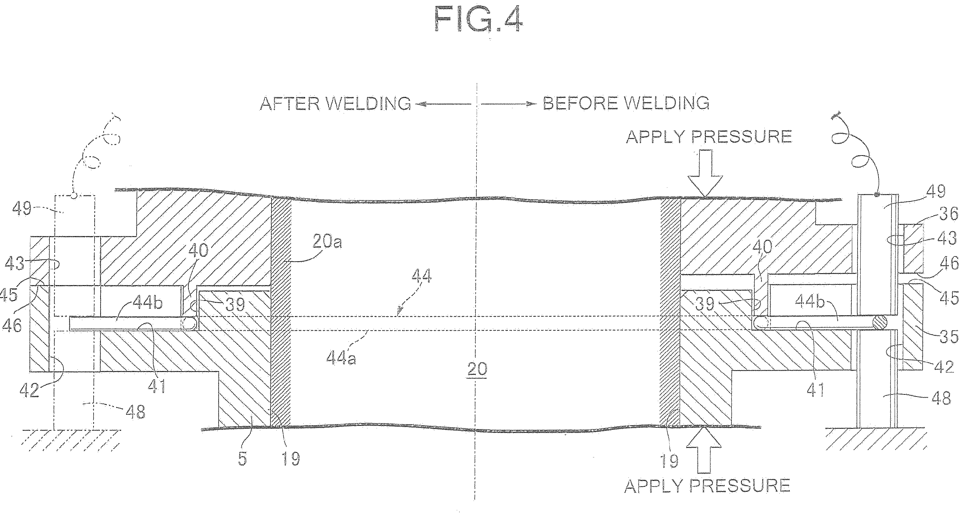

FIG. 4 is a sectional view along line 4-4 in FIG. 2, the right half showing a state before welding of first and second joining flanges and the left half showing a state after welding of the first and second joining flanges, (first embodiment)

### EXPLANATION OF REFERENCE NUMERALS AND SYMBOLS

- 5: Control base
- 7: Valve guide hole
- 10: Metering hole
- 12: Control valve
- 18: Step
- 19: Mounting hole
- 20: Actuator (electric motor)
- 20a: Stator
- 20b: Output shaft
- 21: Seal member
- 35: First joining flange
- 36: Second joining flange
- 39: Welding concave portion (welding groove)
- 40: Welding convex portion (welding projection)
- 44: Heating element
- 45, 46: Welding restriction part

### MODES FOR CARRYING OUT THE INVENTION

An embodiment in which the present invention is applied to an air intake control device of an engine is explained below by reference to the attached drawings.

### FIRST EMBODIMENT

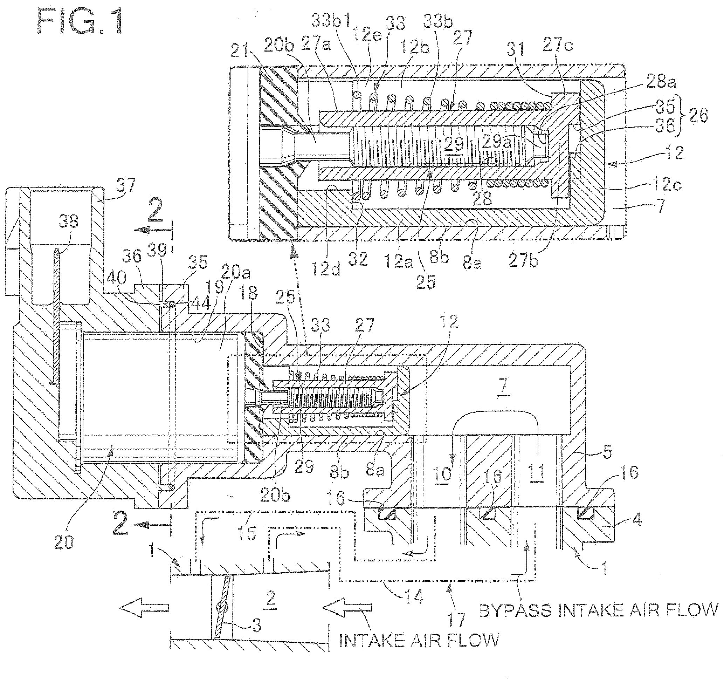

First, in FIG. 1, reference numeral 1 is a throttle body that is to be mounted on, for example, an engine for a motorcycle, and has in its central part an air intake path 2 communicating with an engine intake port, a butterfly type throttle valve 3 for opening and closing the air intake path 2 being axially supported on the throttle body 1. A support platform 4 is formed integrally with an upper wall of the throttle body 1, and a control base 5 is superimposed on the support platform 4 and secured thereto by means of a bolt, which is not illustrated.

Formed in the control base 5 is a bottomed cylinder-shaped valve guide hole 7, this valve guide hole 7 having a rectangular cross section, and an inside face, on the lower side along the direction of gravity, of the valve guide hole 7 serving as a control inside face 8a. Provided in the control base 5 are a metering hole 10 opening on the control inside face 8a and an inlet hole 11 opening on the control inside face 8a on a side closer to the bottom part of the valve guide hole 7 than the metering hole 10. A control valve 12 for opening and closing the metering hole 10 is slidably fitted into the valve guide hole 7.

On the other hand, the throttle body 1 is provided with a bypass upstream passage 14 providing a connection between the air intake path 2 upstream of the throttle valve 3 and the inlet hole 11, and a bypass downstream passage 15 providing a connection between the metering hole 10 and the air intake path 2 downstream of the throttle valve 3. A seal member 16 is disposed between joining faces of the throttle body 1 and the control base 5, the seal member 16 surrounding a section where the bypass upstream passage 14 and the inlet hole 11 are connected and a section where the bypass downstream passage 15 and the metering hole 10 are connected. The bypass upstream passage 14, the inlet hole 11, the valve guide hole 7, the metering hole 10, and the bypass downstream passage 15 form a bypass 17 that bypasses the throttle valve 3 and is connected to the air intake path 2.

The control valve 12 is formed from a control wall 12a having a lower face as a control outside face 8b that is in sliding contact with the control inside face 8a of the valve guide hole 7, a pair of side walls 12b and 12b rising from left and right end parts of the control wall 12a and opposing left and right inside faces of the valve guide hole 7, a front end wall 12c rising from the front end, on the bottom part side of the valve guide hole 7, of the control wall 12a and linking front end parts of the two side walls 12b and 12b, and a U-shaped inward collar 12d projecting inwardly from rear end parts of the control wall 12a and the two side walls 12a and 12a, the control valve 12 forming a box shape with a face on the side opposite to the control wall 12a as an open face 12e. The control valve 12 can therefore slide in the axial direction but cannot rotate within the valve guide hole 7, which has a square cross section.

A motor mounting hole 19 connected to the open end of the valve guide hole 7 via a step part 18 and having a larger diameter than that of the valve guide hole 7 is provided in the control base 5, and a stator 20a of an electric motor 20 is fitted into the motor mounting hole 19. In this arrangement, a seal member 21, made of an elastic material such as a rubber, that is in intimate contact with an outer peripheral face of an output shaft 20b of the electric motor 20 is held between a front end face of the stator 20a and the step part 18. The output shaft 20b of the electric motor 20 is capable of forward and reverse rotation, and the control valve 12 is linked to the output shaft 20b via a screw mechanism 25.

The screw mechanism 25 is formed from a slide piece 27 that is linked to the control valve 12 via rotation-preventing means 26 and that synchronously opens and closes the control valve 12, and a threaded shaft 29 that is provided so as to be connected to the output shaft 20b of the electric motor 20 and that is screwed into a threaded hole 28 provided in the slide piece 27 along the direction in which the control valve 12 slides. The threaded hole 28 is formed into a pouch shape having a dead-end portion 28a. The slide piece 27 is formed from a tubular shaft 27a that extends through the interior of the U-shaped inward collar 12d of the control valve 12 and that is disposed within the control valve 12, and a flange 27c that is formed on the outer periphery of a closed end wall 27b at the front end of the tubular shaft 27a, the tubular shaft 27a being provided with the pouch-shaped threaded hole 28 into which the threaded shaft 29 is screwed.

A first spring seat 31 is formed on an inner face of the outward flange 27c, a second spring seat 32 is formed on an inner face of the inward collar 12d, and a coil spring 33 is provided in a compressed state between these spring seats 31 and 32, the control valve 12 being urged rearward with respect to the slide piece 27, that is, toward the electric motor 20, by means of the set load of the coil spring 33, thereby maintaining a state in which the front end wall 12c of the slide piece 27 abuts against the outward flange 27c. This enables the slide piece 27 and the control valve 12 to be linked to each other in the axial direction without rattling.

The rotation-preventing means 26 is formed from a key groove 35 that is formed on an outer end face of the closed end wall 27b of the slide piece 27 and a key 36 that is projectingly provided on an inner end face of the front end wall 12c of the control valve 12 and engages with the key groove 35, relative rotation of the slide piece 27 and the control valve 12 being prevented by engagement between the key groove 35 and the key 36.

The fully open position of the control valve 12 at which the metering hole 10 is fully opened is restricted by the extremity part of the threaded shaft 29 abutting against the dead-end portion 28a of the threaded hole 28 of the control valve 12.

When the throttle valve 3 is fully closed, an electronic control unit controls energization of the electric motor 20 so as to rotate the output shaft 20b of the electric motor 20 forward or in reverse in order to obtain the optimum degree of opening of the control valve 12 corresponding to engine operating conditions, such as when the engine is started, when there is fast idling, when there is normal idling, or when there is engine braking based on information about engine operating conditions such as throttle valve degree of opening, engine intake negative pressure, intake air temperature, engine temperature, and engine rotational speed. When the output shaft 20b rotates forward or in reverse, the rotation is transmitted, while being reduced in speed by means of the screw mechanism, to the control valve 12 via the slide piece 27 as a fore-and-aft displacement in the axial direction, and it is therefore possible for the control valve 12 to finely adjust, by means of the axial displacement thereof, the area of the metering hole 10 opening in the valve guide hole 7. This enables the engine intake volume flowing through the bypass 17 to be finely adjusted so as to correspond to engine starting, fast idling, normal idling, engine braking, etc.

Since the metering hole 10 opened and closed by the control valve 12 has an elongated hole shape having its major axis along the direction in which the control valve 12 slides, it is possible to finely adjust the effective opening area according to sliding of the control valve 12.

In this case, acting simultaneously on the control valve 12 are a pressing force toward the control inside face 8a side by virtue of gravity and an attracting force by virtue of engine intake negative pressure applied from the metering hole 10 to the control outside face 8b of the control valve 12, the force putting the control outside face 8b and the control inside face 8a into intimate contact being increased thereby.

When the throttle valve 3 is being opened, an intake air volume corresponding to the degree of opening is supplied to the engine through the air intake path 2, and the engine is shifted to an output operation region.

The slide piece 27 and the control valve 12 are linked by the coil spring 33 without rattling in the axial direction, and the control valve 12 can follow axial movement of the slide piece 27 in synchronization without delay.

Furthermore, since the rotation-preventing means 26, which links the slide piece 27 and the control valve 12, is formed from the key groove 35 and the key 36, which are formed on axially-opposing end faces of the slide piece 27 and the control valve 12 respectively and which are engaged with each other by the urging force of the coil spring 33 linking the slide piece 27 and the control valve 12, it is possible to contribute to simplification of the structure of the air intake control device without increasing the number of components because of the rotation-preventing means 26. Moreover, the arrangement of the rotation-preventing means 26 is compact, thus avoiding any increase in the size of the air intake control device.

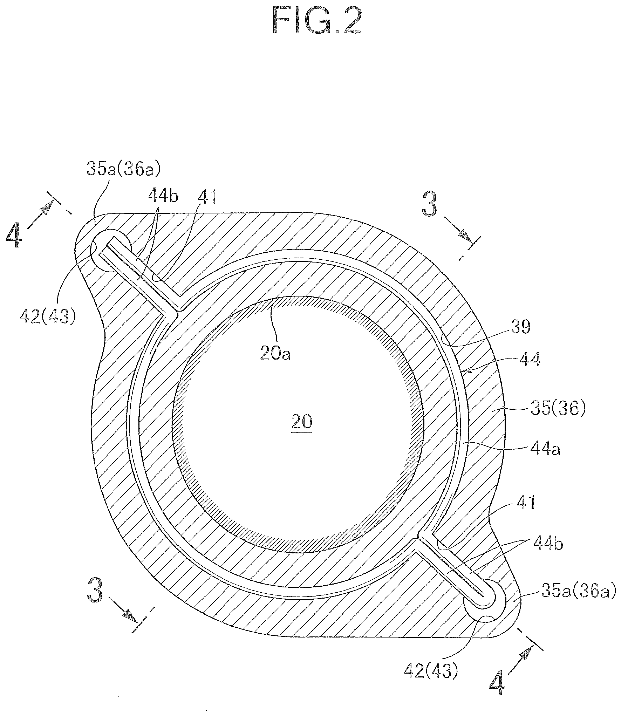

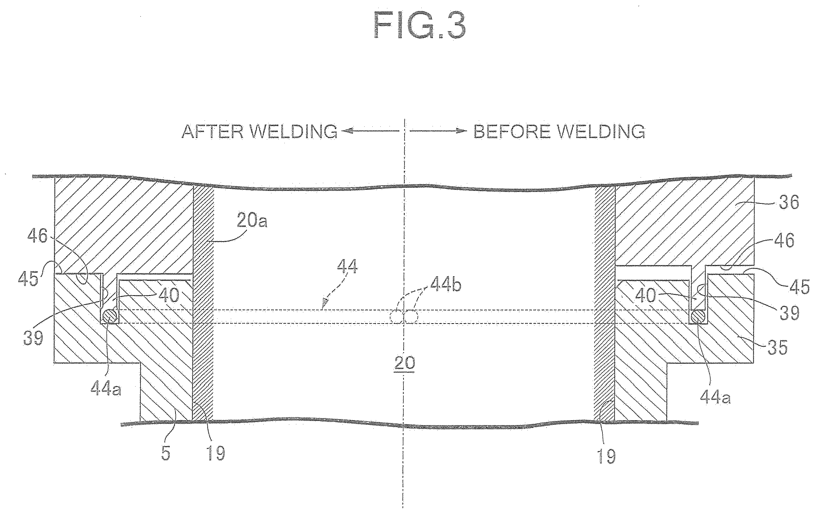

The structure with which the control base 5 and the electric motor 20 are joined is now explained by reference to FIG. 1 to FIG. 3.

Formed integrally with an end part, on the opening side of the motor mounting hole 19, of the control base 5 is a first joining flange 35 extending in a direction perpendicular to the axial direction of the mounting hole 19. In the illustrated example, since the control base 5 is made of a synthetic resin, the first joining flange 35 is also made of a synthetic resin. On the other hand, formed integrally with the stator 20a of the electric motor 20 so as to oppose the first joining flange 35 is a second joining flange 36, which is made of a synthetic resin and is integral with a coupler 37, and provided on the coupler 37 is a terminal 38 for the supply of electricity to the electric motor 20. An annular welding groove 39 surrounding the stator 20a is provided on an end face of the first joining flange 35, and an annular welding projection 40 inserted into the welding groove 39 is provided on an end face of the second joining flange 36.

Furthermore, the first and second joining flanges 35 and 36 have a pair of ear portions 35a and 35a; 36a and 36a projecting in the radial direction and opposite each other, and the ear portions 35a and 35a of the first joining flange 35 are provided with a pair of terminal grooves 41 and 41 extending from the welding groove 39 in the radial direction. The ear portions 35a and 35a; 36a and 36a, which are opposite each other, are provided with through holes 42 and 43 that extend therethrough and are arranged in one straight line.

A heating element 44 is disposed in the welding groove 39 and the terminal grooves 41 and 41, the heating element 44 being formed into a shape so as to correspond thereto. That is, the heating element 44 is formed from an annular portion 44a disposed in the annular welding groove 39, and a pair of terminal portions 44b and 44b extending linearly from the annular portion 44a in the radially outward direction. This heating element 44 is held between the groove bottom part of the welding groove 39 and the extremity part of the welding projection 40, the groove bottom part and the extremity part are melted and joined, that is, welded, by heat generated by passing an electric current, and in order to restrict the amount of sinking during welding, welding restriction parts 45 and 46 that can abut against each other are provided on opposing faces, on the outer peripheral side, of the first and second joining flanges 35 and 36.

When welding the first and second joining flanges 35 and 36, first, the seal member 21 is fitted into the motor mounting hole 19 of the control base 5 up to the position where it abuts against the step 18, and while inserting the output shaft 20b of the electric motor 20 and the threaded shaft 29 through the center hole of the seal member 21, the stator 20a is fitted into the motor mounting hole 19 to thus put the end face of the stator 20a in contact with the seal member 21.

Subsequently, with the heating element 44 disposed in the welding groove 39 and the terminal grooves 41 and 41 of the first joining flange 35 of the control base 5, the welding projection 40 of the second joining flange 36 of the electric motor 20 is inserted, and the terminal portions 44b and 44b of the heating element 44 are held between a pair of insulating terminal receiving pins 48 and 48 inserted into the pair of through holes 42 and 42 and a pair of electrode rods 49 and 49 inserted into the through holes 42 and 42 via the pair of through holes 43 and 43. While applying force to press together the first and second joining flanges 35 and 36, power is supplied to the heating element 44 via the pair of electrode rods 49 and 49, the groove bottom part of the welding groove 39 and the extremity part of welding projection 40, which are pressed against the heating element 44, are welded by means of heat generated by the heating element 44, and when sinking of the welding projection 40 into the welding groove 39 thereby attains a defined value, the welding restriction parts 45 and 46 provided on the opposing faces of the first and second joining flanges 35 and 36 abut against each other to thus restrict sinking beyond the defined value, and at the same time the passage of current through the heating element 44 is stopped. Subsequently, after waiting for the welded part to solidify, the pressing force is released from the first and second joining flanges 35 and 36.

In this way, it is possible to join the control base 5 and the electric motor without using a fixing member such as a mounting plate or a bolt, thus simplifying the joining structure and consequently reducing the cost. Moreover, since the amount of sinking during welding of the groove bottom part and the extremity part is restricted by the welding restriction parts 45 and 46 of the first and second joining flanges 35 and 36, it is possible to keep the relative positions of the control base 5 and the electric motor 20 after welding fixed, thus stabilizing the opening and closing positions of the control valve 12.

The sinking causes a pressure via which the stator 20a is pressed against the seal member 21, and since this ensures an appropriate sealing pressure of the seal member 21 and enables the control base 5 and the stator 20a to be sealed reliably, it is possible to prevent foreign matter (for example, fuel components or soot generated when there is engine blow-back) from entering the electric motor 20 side via the valve guide hole 7.

Furthermore, since the welding groove 39 and the welding projection 40 are formed into an annular shape so as to surround the stator 20a and the open end of the motor mounting hole 19, the welded part surrounds the stator 20a and the open end of the motor mounting hole 19, and it is possible to reliably seal the motor mounting hole 19 and the stator 20a.

Moreover, since the welding restriction parts 45 and 46 are provided on opposite faces on the outer peripheral side of the first and second joining flanges 35 and 36, the opposing faces on the outer peripheral side of the first and second joining flanges 35 and 36 assume a state of intimate contact without a gap after welding, thus giving a good appearance.

The present invention is not limited to the above embodiment and may be modified in a variety of ways as long as the modifications do not depart from the spirit and scope thereof. For example, in contrast to the above embodiment, the welding groove 39 and the welding projection 40 may be provided on the second joining flange 36 and the first joining flange 35 respectively.

## Claims

1. A flow rate control device in which a valve guide hole (7) and a metering hole (10) are formed in a control base (5), the metering hole (10) opening on an inside face of the valve guide hole (7) and a fluid passing through the metering hole (10) by way of the valve guide hole (7), a control valve (12) for opening and closing the metering hole (10) is fitted into the valve guide hole (7) and configured to be movable for opening and closing of the metering hole (10) in a direction along which the valve guide hole (7) is extended, an output shaft (20b) of an actuator (20) is linked to the control valve (12) in order to make the control valve (12) open and close, and a stator (20a) of the actuator (20) is fitted into a mounting hole (19) provided in the control base (5) so as to communicate with the valve guide hole (7), the mounting hole (19) being extended in the same direction as the direction of the valve guide hole (7) being extended,
**characterized in that** the control base (5) is provided with a first joining flange (35), made of a synthetic resin, extending in a direction perpendicular to an axial direction of the mounting hole (19), the stator (20a) of the actuator (20) is provided at an outer periphery thereof with a second joining flange (36), made of a synthetic resin, which is separate from the control base (5) and opposes the first joining flange (35), a welding concave portion (39) is provided in one of opposing faces of the first and second joining flanges (35, 36), a welding convex portion (40) that is to be inserted into the welding concave portion (39) is provided on the other of the opposing faces, a heating element (44) for welding a bottom part of the welding concave portion (39) and a periphery of an extremity part of the welding convex portion (40) is disposed between the bottom part and the extremity part, and the first and second joining flanges (35, 36) are provided with welding restriction parts (45, 46) that maintain a defined value by abutting against each other when the amount of sinking of the bottom part and the extremity part during welding in the direction of extension of the valve guide hole (17) reaches the defined value.

2. The flow rate control device according to Claim 1, wherein
the second joining flange (36) is formed integrally with a coupler (37) and a terminal (38) is provided on the coupler (37) for supply of electricity to the actuator (20).

3. The flow rate control device according to Claim 1, wherein
a step (18) opposing an end face of the stator (20a) is formed between the mounting hole (19) and the valve guide hole (7), a seal member (21) is disposed between the step and the end face of the stator (20a), and the seal member (21) is compressed by the step (18) and the stator (20a) in the direction of extension of the valve guide hole (7) when the first and second flanges (35, 36) are welded, thereby to provide a seal between the valve guide hole (7) and the mounting hole (19).

4. The flow rate control device according to Claim 1, wherein
the welding concave portion (39) and the welding convex portion (40) are formed into an annular shape so as to surround the stator (20a) and the mounting hole (19).

## Patentansprüche

1. Strömungsratensteuervorrichtung, in der ein Ventilführungsloch (7) und ein Dosierloch (10) in einer Steuerbasis (5) ausgebildet sind, wobei sich das Dosierloch (10) an einer Innenfläche des Ventilführungslochs (7) öffnet und ein Fluid durch das Dosierloch (10) über den Weg des Ventilführungslochs (7) tritt, ein Steuerventil (12) zum Öffnen und Schließen des Dosierlochs (10) in das Ventilführungsloch (7) eingesetzt ist und so konfiguriert ist, dass es zum Öffnen und Schließen des Dosierlochs (10) in einer Richtung bewegbar ist, entlang der sich das Ventilführungsloch (7) erstreckt, eine Ausgangswelle (20b) eines Aktuators (20) mit dem Steuerventil (12) gekoppelt ist, um ein Öffnen und Schließen des Steuerventils (12) zu bewirken, und ein Stator (20a) des Aktuators (20) in ein Montageloch (19) eingesetzt ist, das in der Steuerbasis (5) vorgesehen ist, um mit dem Ventilführungsloch (7) zu kommunizieren, wobei sich das Montageloch (19) in der gleichen Richtung erstreckt wie die Erstreckungsrichtung des Ventilführungslochs (7),
**dadurch gekennzeichnet, dass** die Steuerbasis (5) mit einem aus Kunstharz hergestellten ersten Verbindungsflansch (35) versehen ist, der sich in einer Richtung senkrecht zu einer axialen Richtung des Montagelochs (19) erstreckt, der Stator (20a) des Aktuators (20) an seinem Außenumfang mit einem zweiten aus Kunstharz hergestellten Verbindungsflansch (36) versehen ist, der von der Steuerbasis (5) getrennt ist und dem ersten Verbindungsflansch (35) gegenüberliegt, ein konkaver Schweißabschnitt (39) in einer von gegenüberliegenden Flächen der ersten und zweiten Verbindungsflansche (35, 36) vorgesehen ist, ein konvexer Schweißabschnitt (40), der in den konkaven Schweißabschnitt (39) einzusetzen ist, an der anderen der gegenüberliegenden Flächen vorgesehen ist, ein Heizelement (44) zum Verschweißen eines Bodenteils des konkaven Schweißabschnitts (39) mit einem Umfang eines Außenteils des konvexen Schweißabschnitts (40) zwischen dem Bodenteil und dem Außenteil angeordnet ist, und die ersten und zweiten Verbindungsflansche (35, 36) mit Schweißbegrenzungsteilen (45, 46) versehen sind, die einen definierten Wert beibehalten, indem sie sich gegeneinander abstützen, wenn der Einsenkbetrag des Bodenteils und des Außenteils während des Schweißens in der Erstreckungsrichtung des Ventilführungslochs (17) einen definierten Wert erreicht.

2. Die Strömungsratensteuervorrichtung nach Anspruch 1, wobei der zweite Verbindungsflansch (36) einstückig mit einer Kupplung (37) ausgebildet ist, und ein Anschluss (38) an der Kupplung (37) vorgesehen ist, um dem Aktuator (20) Elektrizität zuzuführen.

3. Die Strömungsratensteuervorrichtung nach Anspruch 1, wobei eine Stufe (18), die einer Endfläche des Stators (20a) gegenüberliegt, zwischen dem Montageloch (19) und dem Ventilführungsloch (7) ausgebildet ist, ein Dichtungselement (21) zwischen der Stufe und der Endfläche des Stators (20a) angeordnet ist, und das Dichtungselement (21) durch die Stufe (18) und den Stator (20a) in der Erstreckungsrichtung des Ventilführungslochs (7) komprimiert wird, wenn die ersten und zweiten Flansche (35,36) verschweißt werden, um hierdurch eine Dichtung zwischen dem Ventilführungsloch (7) und dem Montageloch (19) vorzusehen.

4. Die Strömungsratensteuervorrichtung nach Anspruch 1, wobei der konkave Schweißabschnitt (39) und der konvexe Schweißabschnitt (40) zu einer den Stator (20a) und das Montageloch (19) umgebenden Ringform ausgebildet sind.

## Revendications

1. Dispositif de régulation de débit dans lequel un trou de guidage de vanne (7) et un trou de mesure (10) sont formés dans une embase de régulation (5), le trou de mesure (10) débouchant sur une face intérieure du trou de guidage de vanne (7) et un fluide passant à travers le trou de mesure (10) au moyen du trou de guidage de vanne (7), une vanne de régulation (12) pour ouvrir et fermer le trou de mesure (10) est installée dans le trou de guidage de vanne (7) et est configurée pour être mobile pour ouvrir et fermer le trou de mesure (10) dans une direction suivant laquelle le trou de guidage de vanne (7) est étendu, un arbre de sortie (20b) d'un actionneur (20) est lié à la vanne de régulation (12) afin de permettre l'ouverture et la fermeture de la vanne de régulation (12), et un stator (20a) de l'actionneur (20) est installé dans un trou de montage (19) prévu dans l'embase de régulation (5) de façon à communiquer avec le trou de guidage de vanne (7), le trou de montage (19) étant étendu dans la même direction que la direction dans laquelle est étendu le trou de guidage de vanne (7),
**caractérisé en ce que** l'embase de régulation (5) est dotée d'une première bride d'assemblage (35), faite d'une résine synthétique, s'étendant dans une direction perpendiculaire à une direction axiale du trou de montage (19), le stator (20a) de l'actionneur (20) est doté au niveau d'une périphérie externe de celui-ci d'une seconde bride d'assemblage (36), faite d'une résine synthétique, qui est séparée de l'embase de régulation (5) et est opposée à la première bride d'assemblage (35), une portion concave de soudage (39) est prévue dans l'une de faces opposées des première et seconde brides d'assemblage (35, 36), une portion convexe de soudage (40) qui est destiné à être insérée dans la portion concave de soudage (39) est prévue sur l'autre des faces opposées, un élément chauffant (44) pour souder une partie inférieure de la portion concave de soudage (39) et une périphérie d'une partie d'extrémité de la portion convexe de soudage (40) est disposée entre la partie inférieure et la partie d'extrémité, et les première et seconde brides d'assemblage (35, 36) sont pourvues de parties de restriction de soudage (45, 46) qui maintiennent une valeur définie en s'appuyant l'une contre l'autre lorsque la quantité d'immersion de la partie inférieure et de la partie d'extrémité pendant un soudage dans la direction d'extension du trou de guidage de vanne (17) atteint la valeur définie.

2. Dispositif de régulation de débit selon la revendication 1, dans lequel la seconde bride d'assemblage (36) est formée d'un seul tenant avec un coupleur (37) et une borne (38) est prévue sur le coupleur (37) pour fournir de l'électricité à l'actionneur (20).

3. Dispositif de régulation de débit selon la revendication 1, dans lequel un gradin (18) à l'opposé d'une face d'extrémité du stator (20a) est formé entre le trou de montage (19) et le trou de guidage de vanne (7), un organe de joint d'étanchéité (21) est disposé entre le gradin et la face d'extrémité du stator (20a), et l'organe de joint d'étanchéité (21) est comprimé par le gradin (18) et le stator (20a) dans la direction d'extension du trou de guidage de vanne (7), lorsque les première et seconde brides (35, 36) sont soudées, pour fournir ainsi un joint d'étanchéité entre le trou de guidage de vanne (7) et le trou de montage (19).

4. Dispositif de régulation de débit selon la revendication 1, dans lequel la portion concave de soudage (39) et la portion convexe de soudage (40) se présentent sous une forme annulaire de façon à entourer le stator (20a) et le trou de montage (19).
